# EUROPEAN PATENT APPLICATION

(11) **EP 3 550 889 A1**
(43) Date of publication of application: **09.10.2019**
(21) Application number: 17885981.5
(22) Date of filing: 28.12.2017
(51) Int. Cl.: H04W 36/30, H04W 36/08, H04W 24/10, H04W 16/28

(54) **METHOD AND APPARATUS FOR SUPPORTING BEAM IN WIRELESS COMMUNICATION SYSTEM**

(30) Priority: 29.12.2016 US 201662439926 P
(71) Applicant: LG Electronics Inc., Seoul 07336 (KR)
(72) Inventor: XU, Jian, Seoul 06772 (KR); KIM, Seokjung, Seoul 06772 (KR); BYUN, Daewook, Seoul 06772 (KR)
(74) Representative: Frenkel, Matthias Alexander
(86) International application number: PCT/KR2017/015625
(87) International publication number: WO 2018/124761

(57) **Abstract**

The present invention proposes a handover procedure considering a beam in a new radio access technology (NR). A user equipment (UE) first transmits a measurement report including beam-related information to a source gNB. The source gNB determines to handover the UE to a target gNB on the basis of the measurement report and transmits a handover request message including the beam-related information to the target gNB. Upon receiving the handover request message including the beam-related information, the target gNB may use the beam-related information for radio resource management (RRM) of the UE.

## Description

### BACKGROUND OF THE INVENTION

### Field of the Invention

The present invention relates to wireless communication, and more particularly, to a method and apparatus for supporting a beam in new radio access technology (NR) of a wireless communication system.

### Related Art

3rd generation partnership project (3GPP) long-term evolution (LTE) is a technology for enabling high-speed packet communications. Many schemes have been proposed for the LTE objective including those that aim to reduce user and provider costs, improve service quality, and expand and improve coverage and system capacity. The 3GPP LTE requires reduced cost per bit, increased service availability, flexible use of a frequency band, a simple structure, an open interface, and adequate power consumption of a terminal as an upper-level requirement.

Work has started in international telecommunication union (ITU) and 3GPP to develop requirements and specifications for new radio (NR) systems. The NR system may be called another name, e.g. new radio access technology (new RAT). 3GPP has to identify and develop the technology components needed for successfully standardizing the NR timely satisfying both the urgent market needs, and the more long-term requirements set forth by the ITU radio communication sector (ITU-R) international mobile telecommunications (IMT)-2020 process. Further, the NR should be able to use any spectrum band ranging at least up to 100 GHz that may be made available for wireless communications even in a more distant future.

The NR targets a single technical framework addressing all usage scenarios, requirements and deployment scenarios including enhanced mobile broadband (eMBB), massive machine-type-communications (mMTC), ultra-reliable and low latency communications (URLLC), etc. The NR shall be inherently forward compatible.

Beamforming is antenna technology in which energy radiated from an antenna is concentrated in a particular direction in a space. A purpose of beamforming is to receive a signal having stronger signal intensity from a desired direction or to transfer a signal having more concentrated energy in a desired direction. For higher speed and larger capacity of a wireless communication system, it is required to implement various forms of beams of a high gain. For example, a beamforming system may be used for communication in a high path loss band in various satellite aviation communication using a smart antenna, such as satellite and aviation and high speed transmission and reception communication of a large amount of data for multiple users. Therefore, the beamforming system has been studied in various fields such as next generation mobile communication, and various radar, military and aviation space communication, inter-indoor and building high speed data communication, a wireless local area network (WLAN), and a wireless personal area network (WPAN).

It is being discussed to introduce the concept of a beam in the NR. Accordingly, a user equipment (UE) may be well serviced in many aspects. A system throughput may also be much improved. To support the concept of a beam in the NR, it is necessary to improve 5G RAN architecture and interface procedures. However, UE specific mobility procedures should be also enhanced to improve mobility experience of the UE and to enable an RAN node to well facilitate radio resource management (RRM) for the specific UE.

The concept of a beam in the NR is studying in a physical layer aspect. However, in a network aspect and an entire mobility procedure aspect, a study is not yet started. In the NR, a method of more efficiently supporting the concept of a beam in a network aspect is required.

### SUMMARY OF THE INVENTION

The present invention provides a method and apparatus for supporting a beam in new radio access technology (NR) of a wireless communication system. The present invention also provides a 5G RAN architecture and interface for introducing the concept of a beam including an improved cell specific procedures and an improved user equipment (UE) specific mobility procedure.

In an aspect, a method for performing a handover procedure by a source gNB in a wireless communication system is provided. The method includes receiving a measurement report including beam related information from a user equipment (UE), determining to handover the UE towards a target gNB based on the measurement report, and transmitting a handover request message including the beam related information to the target gNB.

The measurement report may be a beam level measurement report. The beam level measurement report may correspond to the beam related information. The beam related information may include a beam identifier (ID). The handover request message may include the measurement report.

In another aspect, a method for performing a handover procedure by a target gNB in a wireless communication system is provided. The method includes receiving a handover request message including beam related information from a source gNB, performing an admission control on a protocol data unit (PDU) session connection, and transmitting a handover request acknowledge message to the source gNB.

The target gNB may use the beam related information for radio resource management (RRM) of a user equipment (UE).

In NR, the concept of a beam can be more effectively supported.

### BRIEF DESCRIPTION OF THE DRAWINGS

FIG. 1 shows 3GPP LTE system architecture.
FIG. 2 shows an NG-RAN architecture.
FIG. 3 shows a handover procedure in consideration of a beam according to an embodiment of the present invention.
FIGS. 4 and 5 show a handover procedure in consideration of a beam according to another embodiment of the present invention.
FIG. 6 shows a handover procedure by a source gNB according to an embodiment of the present invention.
FIG. 7 shows a handover procedure by a target gNB according to an embodiment of the present invention.
FIG. 8 shows a RAN interface setup procedure according to an embodiment of the present invention.
FIG. 9 shows a RAN interface configuration update procedure according to an embodiment of the present invention.
FIG. 10 shows an RAN interface setup procedure according to another embodiment of the present invention.
FIG. 11 shows a RAN interface configuration update procedure according to another embodiment of the present invention.
FIG. 12 shows a RAN interface setup procedure according to another embodiment of the present invention.
FIG. 13 shows a wireless communication system to implement an embodiment of the present invention.

### DESCRIPTION OF EXEMPLARY EMBODIMENTS

Hereinafter, in the present invention, a wireless communication system based on a 3rd generation partnership project (3GPP) or institute of electrical and electronics engineers (IEEE) is mainly described. However, the present invention is not limited thereto, and the present invention may be applied to other wireless communication systems having the same characteristics to be described hereinafter.

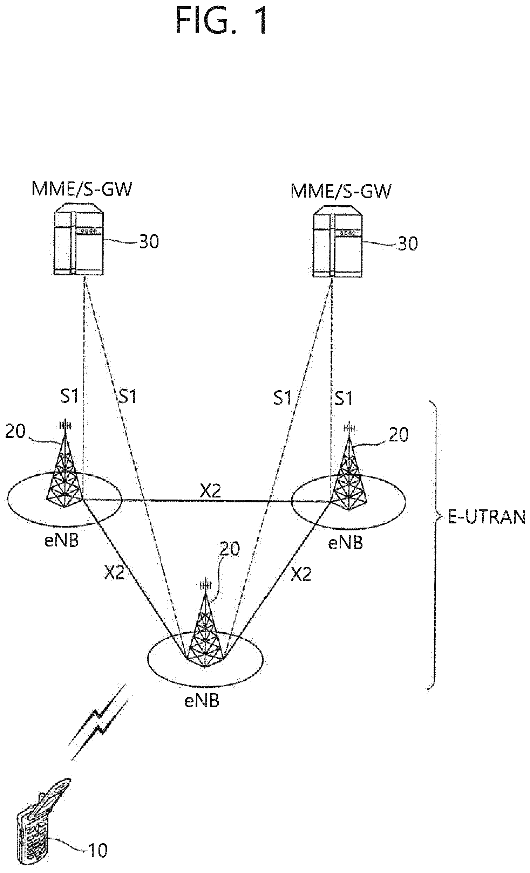

FIG. 1 shows 3GPP LTE system architecture. Referring to FIG. 1, the 3GPP LTE system architecture includes one or more user equipment (UE; 10), an evolved-UMTS terrestrial radio access network (E-UTRAN) and an evolved packet core (EPC). The UE 10 refers to a communication equipment carried by a user. The UE 10 may be fixed or mobile, and may be referred to as another terminology, such as a mobile station (MS), a user terminal (UT), a subscriber station (SS), a wireless device, etc.

The E-UTRAN includes one or more evolved node-B (eNB) 20, and a plurality of UEs may be located in one cell. The eNB 20 provides an end point of a control plane and a user plane to the UE 10. The eNB 20 is generally a fixed station that communicates with the UE 10 and may be referred to as another terminology, such as a base station (BS), an access point, etc. One eNB 20 may be deployed per cell.

Hereinafter, a downlink (DL) denotes communication from the eNB 20 to the UE 10. An uplink (UL) denotes communication from the UE 10 to the eNB 20. A sidelink (SL) denotes communication between the UEs 10. In the DL, a transmitter may be a part of the eNB 20, and a receiver may be a part of the UE 10. In the UL, the transmitter may be a part of the UE 10, and the receiver may be a part of the eNB 20. In the SL, the transmitter and receiver may be a part of the UE 10.

The EPC includes a mobility management entity (MME) and a serving gateway (S-GW). The MME/S-GW 30 provides an end point of session and mobility management function for the UE 10. For convenience, MME/S-GW 30 will be referred to herein simply as a "gateway," but it is understood that this entity includes both the MME and S-GW. A packet data network (PDN) gateway (P-GW) may be connected to an external network.

The MME provides various functions including non-access stratum (NAS) signaling to eNBs 20, NAS signaling security, access stratum (AS) security control, inter core network (CN) node signaling for mobility between 3GPP access networks, idle mode UE reachability (including control and execution of paging retransmission), tracking area list management (for UE in idle and active mode), packet data network (PDN) gateway (P-GW) and S-GW selection, MME selection for handovers with MME change, serving GPRS support node (SGSN) selection for handovers to 2G or 3G 3GPP access networks, roaming, authentication, bearer management functions including dedicated bearer establishment, support for public warning system (PWS) (which includes earthquake and tsunami warning system (ETWS) and commercial mobile alert system (CMAS)) message transmission. The S-GW host provides assorted functions including per-user based packet filtering (by e.g. deep packet inspection), lawful interception, UE Internet protocol (IP) address allocation, transport level packet marking in the DL, UL and DL service level charging, gating and rate enforcement, DL rate enforcement based on access point name aggregate maximum bit rate (APN-AMBR).

Interfaces for transmitting user traffic or control traffic may be used. The UE 10 is connected to the eNB 20 via a Uu interface. The UEs 10 are connected to each other via a PC5 interface. The eNBs 20 are connected to each other via an X2 interface. Neighboring eNBs may have a meshed network structure that has the X2 interface.

The eNB 20 is connected to the gateway 30 via an S1 interface.

5G system is a 3GPP system consisting of 5G access network (AN), 5G core network (CN) and UE. 5G access network is an access network comprising a next generation radio access network (NG-RAN) and/or non-3GPP access network connecting to a 5G core network. NG-RAN is a radio access network that supports one or more of the following options with the common characteristics that it connects to 5G core network:
1) Standalone new radio (NR).
2) NR is the anchor with E-UTRA extensions.
3) Standalone E-UTRA.
4) E-UTRA is the anchor with NR extensions.

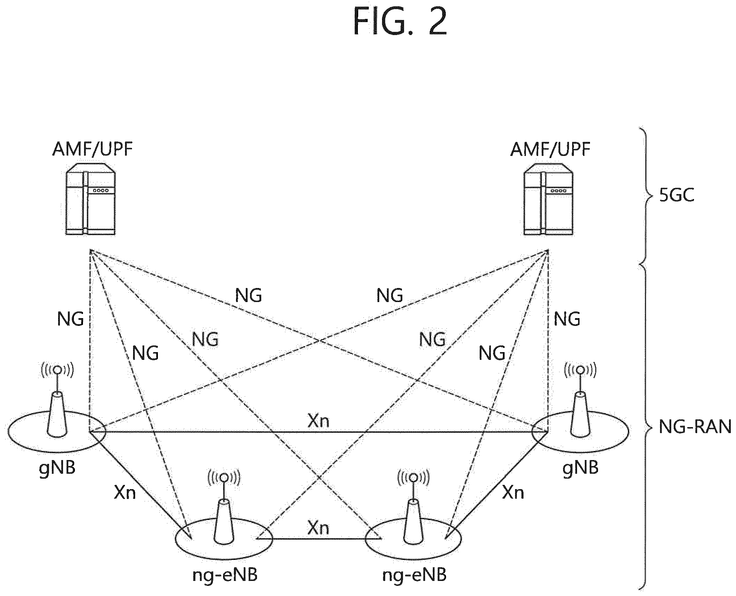

FIG. 2 shows an NG-RAN architecture. Referring to FIG. 2, the NG-RAN includes at least one NG-RAN node. The NG-RAN node includes at least one gNB and/or at least one ng-eNB. The gNB provides NR user plane and control plane protocol terminations towards the UE. The ng-eNB provides E-UTRA user plane and control plane protocol terminations towards the UE. The gNBs and ng-eNBs are interconnected with each other by means of the Xn interface. The gNBs and ng-eNBs are also connected by means of the NG interfaces to the 5G CN. More specifically, the gNBs and ng-eNBs are connected to the access and mobility management function (AMF) by means of the NG-C interface and to the user plane function (UPF) by means of the NG-U interface.

The gNB and ng-eNB host the following functions:
- Functions for radio resource management: Radio bearer control, radio admission control, connection mobility control, dynamic allocation of resources to UEs in both uplink and downlink (scheduling);
- Internet protocol (IP) header compression, encryption and integrity protection of data;
- Selection of an AMF at UE attachment when no routing to an AMF can be determined from the information provided by the UE;
- Routing of user plane data towards UPF(s);
- Routing of control plane information towards AMF;
- Connection setup and release;
- Scheduling and transmission of paging messages;
- Scheduling and transmission of system broadcast information (originated from the AMF or operations & maintenance (O&M));
- Measurement and measurement reporting configuration for mobility and scheduling;
- Transport level packet marking in the uplink;
- Session management;
- Support of network slicing;
- QoS flow management and mapping to data radio bearers;
- Support of UEs in RRC_INACTIVE state;
- Distribution function for non-assess stratum (NAS) messages;
- Radio access network sharing;
- Dual connectivity;
- Tight interworking between NR and E-UTRA.

The AMF hosts the following main functions:
- NAS signaling termination;
- NAS signaling security;
- AS security control;
- Inter CN node signaling for mobility between 3GPP access networks;
- Idle mode UE reachability (including control and execution of paging retransmission);
- Registration area management;
- Support of intra-system and inter-system mobility;
- Access authentication;
- Access authorization including check of roaming rights;
- Mobility management control (subscription and policies);
- Support of network slicing;
- Session management function (SMF) selection.

The UPF hosts the following main functions:
- Anchor point for Intra-/Inter-radio access technology (RAT) mobility (when applicable);
- External protocol data unit (PDU) session point of interconnect to data network;
- Packet routing & forwarding;
- Packet inspection and user plane part of policy rule enforcement;
- Traffic usage reporting;
- Uplink classifier to support routing traffic flows to a data network;
- Branching point to support multi-homed PDU session;
- QoS handling for user plane, e.g. packet filtering, gating, UL/DL rate enforcement;
- Uplink traffic verification (service data flow (SDF) to QoS flow mapping);
- Downlink packet buffering and downlink data notification triggering.

The SMF hosts the following main functions:
- Session management;
- UE IP address allocation and management;
- Selection and control of UP function;
- Configures traffic steering at UPF to route traffic to proper destination;
- Control part of policy enforcement and QoS;
- Downlink data notification.

In the NR, the concept of a beam may be introduced. The beam may correspond to a reference signal synchronization signal (SS)/physical broadcast channel (PBCH) block and/or channel state information reference signal (CSI-RS). Beam level measurement may correspond to the output of an L1 filter such as an SS reference signal received power (SS-RSRP), an SS reference signal received quality (SS-RSRQ), an SS signal to interference and noise ratio (SS-SINR), CSI-RSRP, a CSI-RSRQ, and a CSI-SINR.

Hereinafter, in the NR, in order to more efficiently support the concept of a beam in a network aspect, a method of supporting a beam according to various embodiments of the present invention is described. More particularly, the present invention provides an improved UE specific mobility procedure that supports the concept of a beam and a 5G RAN architecture/interface according to the improved UE specific mobility procedure. Further, the present invention provides an improved cell specific procedure that supports the concept of a beam and a 5G RAN architecture/interface according to the improved cell specific procedure.

### 1. First Embodiment

Currently, a handover procedure does not consider the concept of a beam in terms of measurement, measurement report, handover decision and/or notification to a target RAN node. When the concept of a beam is not considered in a handover procedure, UE experience in a mobility aspect is influenced. Further, the target RAN node may waste resources for servicing an UE. Accordingly, an improved handover procedure that supports the concept of the beam is required.

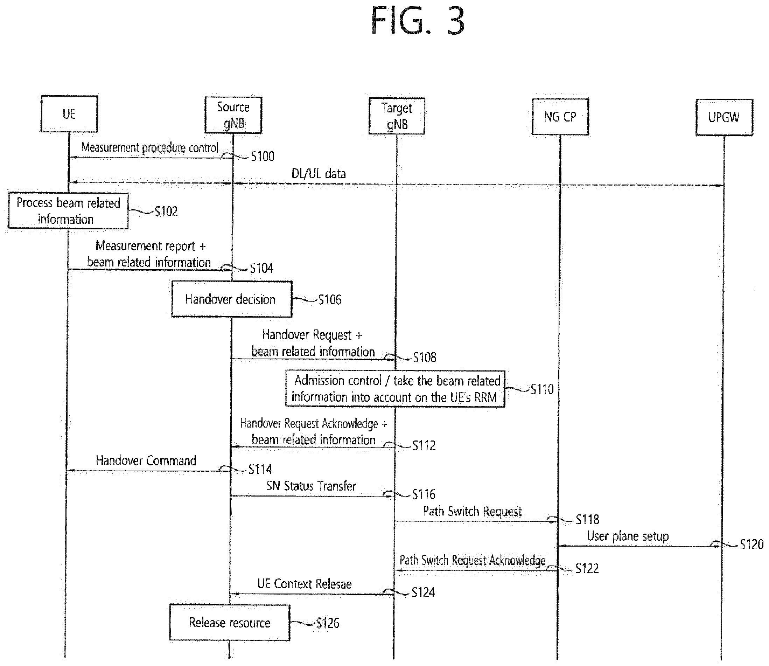

FIG. 3 shows a handover procedure in consideration of a beam according to an embodiment of the present invention. In the following embodiment, it is assumed that a source RAN node of the handover procedure is a source gNB and that a target RAN node is a target gNB, but the present invention is not limited thereto. The source RAN node may be a source ng-eNB, and the target RAN node may be a target ng-eNB.

In step S100, the source gNB configures a UE measurement procedure according to area restriction information. The source gNB may configure the UE to perform measurement in a beam level.

In step S102, the UE measures a target cell in a beam level as configured in system information and performs beam level measurement. Further, the UE may determine how to report beam level measurement to the source gNB, which may perform beam level measurement together with a beam ID. For example, the UE may perform beam level measurement together with a beam ID of a strongest beam. Alternatively, the UE may perform beam level measurement together with beam IDs of a best beam group having an excellent quality. Alternatively, the UE may perform beam level measurement together with beam IDs of all detected beams. Alternatively, the UE may perform beam level measurement together with a beam ID of a beam of a threshold or above.

In step S104, the UE transmits a measurement report together with beam related information to the source gNB. The beam related information may be a beam ID. For example, the UE may transmit a beam ID of a strongest beam and a measurement report of the corresponding beam to the source gNB. Alternatively, the UE may transmit beam IDs of a best beam group of an excellent quality and a measurement report of the corresponding beam to the source gNB. Alternatively, the UE may transmit beam IDs of all detected beams and measurement reports of the corresponding beams to the source gNB. Alternatively, the UE may transmit a beam ID of a beam of a threshold or above and a measurement report of the corresponding beam to the source gNB.

In step S106, the source gNB determines to trigger a handover procedure based on the received measurement report. Further, the source gNB determines to transmit the beam level ID and a beam level measurement report corresponding to the beam ID to the target gNB.

In step S108, the source gNB transmits a handover request message to the target gNB to initiate a handover procedure. The handover request message may include a PDU session context to be handed over. Further, the handover request message may include beam related information. The beam related information may include a beam ID and a beam level measurement report corresponding thereto.

More specifically, the handover request message may include a *HandoverPreparationInformation* message of Table 1. The message is used for transferring NR RRC information used by the target gNB in a handover preparation status including UE capability information.

**[Table 1]**

| |
|---|
| ```
 -- ASN1START
 -- TAG-HANDOVER-PREPARATION-INFORMATION-START
 HandoverPreparationInformation ::= SEQUENCE {
 criticalExtensions CHOICE {
 c1 CHOICE {
 handoverPreparationInformation-r15 HandoverPreparationInformation-r15-IEs,
 spare3 NULL, spare2 NULL, spare 1 NULL
 },
 criticalExtensionsFuture SEQUENCE {}
 }
}
 HandoverPreparationInformation-r15-IEs ::= SEQUENCE {
 ue-CapabilityRAT-List UE-CapabilityRAT-ContainerList,
 sourceConfig OCTET STRING (CONTAINING
 RRCReconfiguration)
 rrm-Config RRM-Config
 OPTIONAL,
 as-Context AS-Context
 OPTIONAL,
 nonCriticalExtension SEQUENCE {}
 OPTIONAL
 }
 AS-Context ::= SEQUENCE {
``` |
| ```
 reestablishmentInfo SEQUENCE {
 sourcePhysCellId PhysCellId,
 targetCellShortMAC-I ShortMAC-I,
 additionalReestabInfoList AdditionalReestabInfoList
 OPTIONAL,
 }
 OPTIONAL,
 configRestrictInfo ConfigRestrictInfoSCG
 OPTIONAL,
 ...
 }
 ReestabNCellInfoList ::= SEQUENCE (SIZE (1..maxCellPrep)) OF ReestabNCellInfo
 ReestabNCellInfo::= SEQUENCE{
 cellIdentity CellIdentity,
 key-gNodeB-Star BIT STRING (SIZE (256)),
 shortMAC-I ShortMAC-I
 }
 RRM-Config ::= SEQUENCE {
 ue-InactiveTime INTEGER,
 candidateCellInfoList CandidateCellInfoList
 OPTIONAL
 ...,
 }
``` |

Referring to Table 1, the *HandoverPreparationInformation* message includes an *RRM-Config* IE. The *RRM-Config* IE mainly represents a local RAN context used for a purpose of RRM. The *RRM-Config* IE may include a *CandidateCellInfoList* IE of Table 2. The *CandidateCellInfoList* IE includes information on a cell in which a source gNB suggests so that the target gNB considers setup.

**[Table 2]**

| |
|---|
| ```
-- ASN1START
-- TAG-CANDIDATE-CELL-INFO-LIST-START
 CandidateCellInfoList ::= SEQUENCE (SIZE (1..maxCellSCG)) OF CandidateCellInfo
CandidateCellInfo ::= SEQUENCE {
cellIdentification SEQUENCE {
physCellId PhysCellId,
dl-CarrierFreq ARFCN-ValueNR
},
measResultCell SEQUENCE {
rsrpResultCell RSRP-Range,
rsrqResultCell RSRQ-Range
}
OPTIONAL,
candidateRS-IndexList CandidateRS-IndexInfoList
OPTIONAL,
...
}
CandidateBeamInfoList ::=SEQUENCE (SIZE (L.maxRS-IndexReport))OF CandidateRS-
IndexInfo
CandidateRS-IndexInfo ::= SEQUENCE {
ssb-Index SSB-Index,
measResultSSB SEQUENCE {
rsrpResultCell RSRP-Range,
rsrqResultCell RSRQ-Range
}
OPTIONAL,
... }
-- TAG-CANDIDATE-CELL-INFO-LIST-STOP
-- ASN1STOP[
``` |

Referring to Table 2, the *CandidateCellInfoList* IE may include a *CandidateCellInfo* IE, and the *CandidateCelllnfo* IE may include a *CandidateRS-IndexInfoList* IE (or *CandidateBeamInfoList* IE). The *CandidateRS-IndexInfoList* IE (or *CandidateBeamInfoList* IE) may include an SSB-Index field corresponding to the above-described beam ID. Further, the *CandidateCellInfo* IE may include a *measResultCell* IE corresponding to the above-described beam level measurement report.

In step S110, the target gNB performs an admission control for PDU session connection transmitted from the source gNB. The admission control may be performed based on the QoS and the like. Beam related information transmitted from the source gNB may be considered for the purpose of radio resource management (RRM) of the corresponding UE to be handed over. That is, the target gNB may use beam related information for RRM of the UE to be handed over. Further, the beam related information transmitted from the source gNB may be considered for other purposes such as mobility of the corresponding UE to be handed over and a better service in the target gNB side.

In step S112, the target gNB prepares a handover procedure together with L1/L2 and transmits a handover request acknowledge message to the source gNB. If necessary, a handover request acknowledge message may include beam related information. For example, the handover request confirmation message may include a beam ID. Accordingly, the UE may easily access to the target cell/beam. The source gNB may transfer the information to the UE by the RRC message.

In step S114, the source gNB notifies the UE of a handover command and access to the target cell.

In step S116, for data forwarding, the source gNB transmits a sequence number (SN) status transfer message to the target gNB.

In step S118, in order to notify that the UE changed the cell, the target gNB transmits a path switch request message to a NG CP. The path switch request message may include a PDU session context to be switched. The PDU session context may include a gNB address and a DL ID for the corresponding PDU session.

In step S120, the NG CP sets a user plane path for a PDU session in a core network. The gNB address and DL ID for the corresponding PDU session may be transmitted to UPGW.

In step S122, the NG CP transmits a path switch request acknowledge message to the target gNB.

In step S124, the target gNB transmits a UE context release message to the source gNB. Accordingly, the target gNB notifies the source gNB of success of the handover procedure and triggers release of resources by the source gNB.

In step S126, the source gNB having received the UE context release message may release radio and control plane related resources related to the UE context. Ongoing data transfer may be continued.

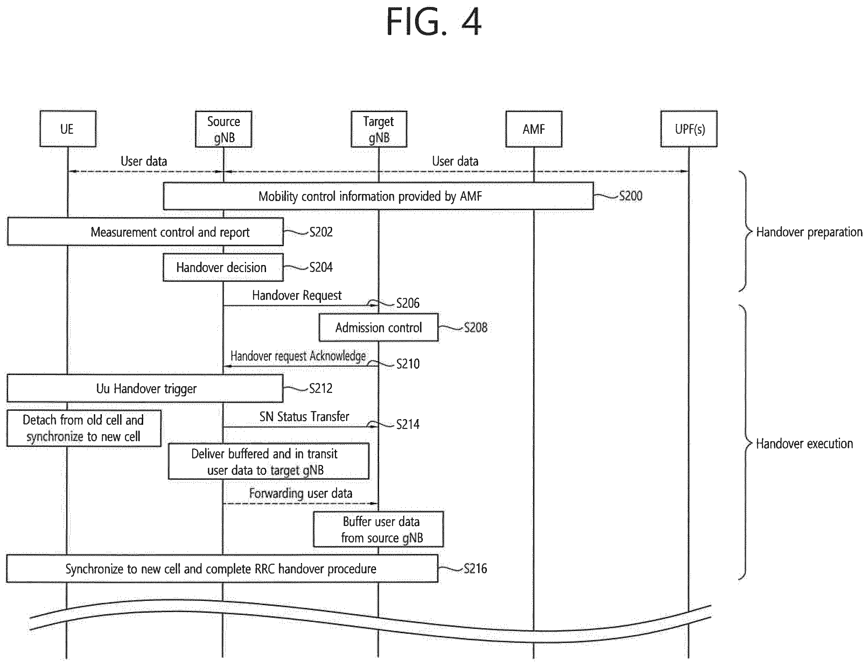

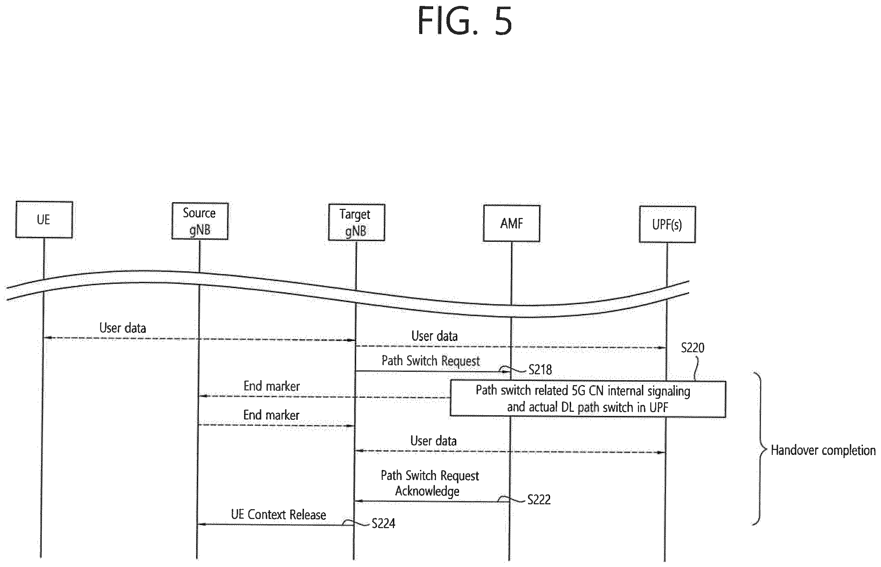

FIGS. 4 and 5 show a handover procedure in consideration of a beam according to another embodiment of the present invention. In the following embodiment, it is assumed that a source RAN node of a handover procedure is a source gNB, and that a target RAN node is a target gNB, but the present invention is not limited thereto. The source RAN node may be a source ng-eNB, and the target RAN node may be a target ng-eNB. A handover procedure of FIGS. 4 and 5 shows an intra-NR handover procedure. The intra-NR handover procedure performs preparation and execution phases of a handover procedure without intervention of 5GC. That is, preparation messages are directly exchanged between gNBs. During a handover completion phase, release of resources at the source gNB is triggered by the target gNB. Further, the handover procedure of FIGS. 4 and 5 shows a basic handover scenario in which an AMF and an UPF are unchanged.

First, a description will be made with reference to FIG. 4. FIG. 4 shows a handover preparation phase and a handover execution phase in a handover procedure.

In step S200, a UE context in the source gNB includes information on provided roaming and access restrictions upon establishing connection or upon updating final timing advance (TA).

In step S202, the source gNB configures the UE measurement procedure, and the UE performs a measurement report according to the measurement configuration.

In step S204, the source gNB determines handover of the UE based on the measurement report and RRM information.

In step S206, the source gNB transmits a handover request message to the target gNB. The handover request message includes a transparent RRC container having necessary information when the target gNB prepares handover. The necessary information includes at least a target cell ID, KgNB*, cell radio network temporary identity (C-RNTI) of the UE in the source gNB, an RRM configuration including an UE inactive time, a default access stratum (AS) configuration including antenna information and a DL carrier frequency, and a UE capability for different radio access technology (RAT). Further, if available, the necessary information may include measurement information reported from the UE including beam related information. The beam related information and the measurement information may follow Tables 1 and 2 described above. Further, when carrier aggregation (CA) is configured, the RRM configuration may include a best cell list in each frequency that may use measurement information.

In step S208, the target gNB may perform an admission control.

In step S210, the target gNB prepares handover together with L1/L2 and transmits a handover request acknowledge message to the source gNB. In order to perform handover, the handover request acknowledge message includes a transparent container to be transmitted to the UE as an RRC message.

In step S212, the source gNB triggers Uu handover and transmits a handover command message to the UE. The handover command message carries necessary information when the UE accesses to the target cell. The handover command message includes at least a target cell ID, new C-RNTI, and a target gNB security algorithm identifier for selected security algorithm. Further, the handover command message may include a set of dedicated random access channel (RACH) resources, association between an RACH resource and an SS block, association between the RACH resource and a UE specific CSI-RS configuration, a common RACH resource, and a target gNB SIB, etc.

In step S214, the source gNB transmits an SN status transfer message to the target gNB.

In step S216, the UE synchronizes with the target cell to complete the RRC handover procedure.

Thereafter, a description will be made with reference to FIG. 5. An operation of FIG. 5 is performed after an operation of FIG. 4. FIG. 5 shows a handover completion phase in the handover procedure.

In step S218, the target gNB transmits a path switch request message to an AMF. The path switch request message triggers a 5GC to switch a DL data path towards the target gNB. Further, the path switch request message triggers the 5GC to establish NG-C interface instance towards the target gNB.

In step S220, the 5GC switches the DL data path towards the target gNB.

In step S222, the AMF transmits a path switch request confirmation message to the target gNB.

In step S224, the target gNB transmits a UE context release message to the source gNB. Accordingly, the target gNB notifies the source gNB of success of handover and triggers release of resources by the source gNB. The target gNB receives the path switch request acknowledge message from the AMF and transmits a UE context release message. The source gNB having received the UE context release message may release radio and control plane related resources related to the UE context. Ongoing data transfer may be continued.

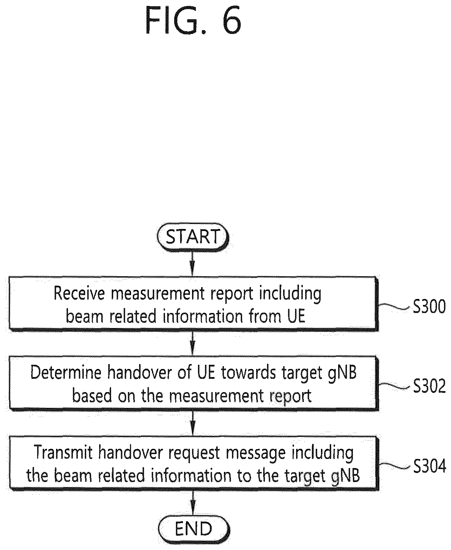

FIG. 6 shows a handover procedure by a source gNB according to an embodiment of the present invention. The present invention shown in FIG. 3 to FIG. 5 may be applied to this embodiment.

In step S300, the source gNB receives a measurement report including beam related information from a UE. The measurement report may be a beam level measurement report. The beam level measurement report may correspond to the beam related information. The beam related information may include a beam ID. The source gNB may configure the UE for a beam level measurement.

In step S302, the source gNB determines handover of the UE towards a target gNB based on the measurement report.

In step S304, the source gNB transmits a handover request message including the beam related information to the target gNB. The handover request message may include the measurement report. The handover request message may include a PDU session context to be handed over. The beam related information and the measurement report may follow Table 1 and Table 2 described above.

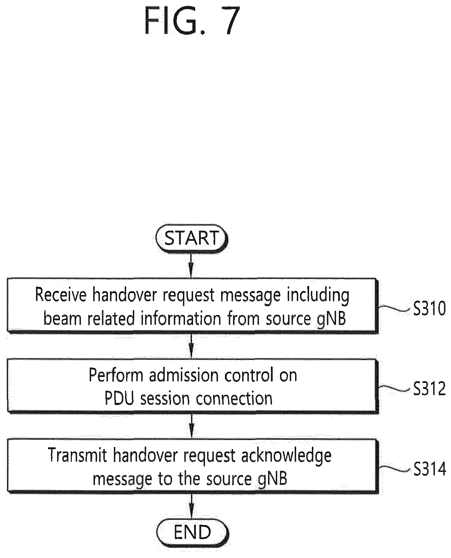

FIG. 7 shows a handover procedure by a target gNB according to an embodiment of the present invention. The present invention shown in FIG. 3 to FIG. 5 may be applied to this embodiment.

In step S310, the target gNB receives a handover request message including beam related information from a source gNB. The beam related information may include a beam ID. The handover request message may include a measurement report reported by a UE. The measurement report may be a beam level measurement report. The beam level measurement report may correspond to the beam related information. The beam related information and the measurement report may follow Table 1 and Table 2 described above.

In step S312, the target gNB performs an admission control on a PDU session connection. The admission control may be performed based on a QoS. Further, the target gNB may use the beam related information for RRM of a UE.

In step S314, the target gNB transmits a handover request acknowledge message to the source gNB. The handover request acknowledge message may include a beam ID.

A UE specific mobility procedure, i.e. a handover procedure may be more optimized in the RAN node together with the beam support according to an embodiment of the present invention described with reference to FIGS. 3 to 7. Mobility experience of the UE may be improved, and the UE may access more smoothly to a target RAN node. Further, a handover procedure according to an embodiment of the present invention helps an RAN node to better perform RRM for a specific UE, thereby improving an entire system from a resource utilization viewpoint. A system throughput may also be improved.

### 2. Second embodiment

An X2 setup procedure in a legacy LTE-based system is a cell-based procedure. When the X2 setup procedure is continuously used, the concept of a beam for the RAN node may not be known by neighbors. Therefore, it may not be easy that the RAN node makes determination for a beam level in order to service to the UE.

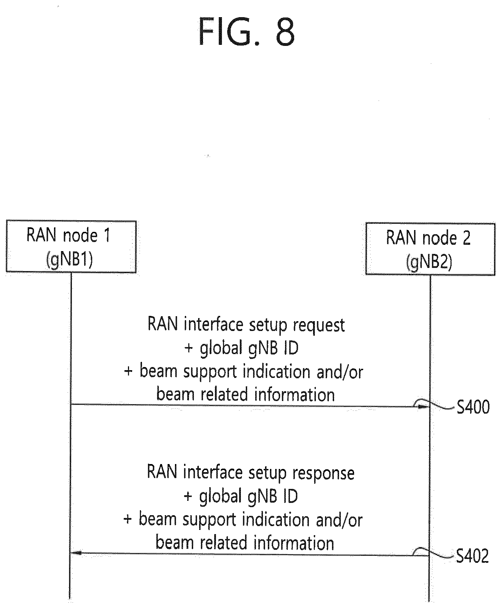

FIG. 8 shows a RAN interface setup procedure according to an embodiment of the present invention. In the present embodiment, the RAN interface may be an Xn interface set between gNBs. However, the present invention is not limited thereto.

In step S400, when the RAN interface (e.g. Xn interface) is set between RAN nodes (e.g. gNBs), if an RAN node 1 (e.g. gNB1) supports beam technology, the RAN node 1 transmits a RAN interface setup request message to a RAN node 2 (e.g. gNB2). In this case, the RAN interface setup request message may include a global gNB ID. Further, the RAN interface setup request message may include beam support indication and/or beam related information (e.g. beam ID).

When the RAN node 2 receives an RAN interface setup request message including beam support indication and/or beam related information, the RAN node 2 may consider the received beam support indication and/or beam related information for UE specific procedures. For example, resource allocation may be performed in a beam level. Alternatively, the mobility procedure may be performed in consideration of the beam level. Further, in step S402, the RAN node 2 transmits a RAN interface setup response message to the RAN node 1. In this case, the RAN interface setup response message may include a global gNB ID. Further, the RAN interface setup response message may include beam support indication and/or beam related information (e.g. beam ID).

When the RAN node 1 receives an RAN interface setup response message including beam support indication and/or beam related information, the RAN node 1 may also take an appropriate action based on the received beam support indication and/or beam related information. For example, resource allocation may be performed in a beam level. Alternatively, the mobility procedure may be performed in consideration of the beam level.

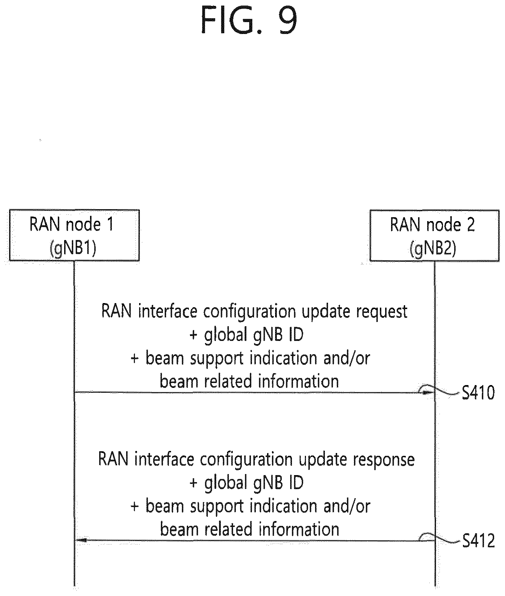

FIG. 9 shows a RAN interface configuration update procedure according to an embodiment of the present invention. In the present embodiment, the RAN interface may be an Xn interface set between gNBs. However, the present invention is not limited thereto.

In step S410, when a configuration of the RAN interface (e.g. Xn interface) is updated between RAN nodes (e.g. gNBs), if an RAN node 1 (e.g. gNB1) is updated to support beam technology, the RAN node 1 transmits an RAN interface configuration update request message to an RAN node 2 (e.g. gNB2). In this case, the RAN interface configuration update request message may include a global gNB ID. Further, the RAN interface configuration update request message may include beam support indication and/or beam related information (e.g. beam ID).

When the RAN node 2 receives an RAN interface configuration update request message including beam support indication and/or beam related information, the RAN node 2 may consider the received beam support indication and/or beam related information for a UE specific procedure. For example, resource allocation may be performed in a beam level. Alternatively, the mobility procedure may be performed in consideration of the beam level. Further, in step S412, the RAN node 2 transmits a RAN interface configuration update response message to the RAN node 1. In this case, the RAN interface configuration update response message may include a global gNB ID. Further, the RAN interface configuration update response message may include beam support indication and/or beam related information (e.g. beam ID).

When the RAN node 1 receives an RAN interface configuration update response message including beam support indication and/or beam related information, the RAN node 1 may also take an appropriate action based on the received beam support indication and/or beam related information. For example, resource allocation may be performed in a beam level. Alternatively, the mobility procedure may be performed in consideration of the beam level.

Because RAN nodes may know each other according to an embodiment of the present invention described with reference to FIGS. 8 and 9, determination of mobility procedures and other procedures of a specific UE may be facilitated. In this way, a system throughput can be much improved, and the UE can be much better serviced in terms of a throughput and mobility of the UE.

### 3. Third embodiment

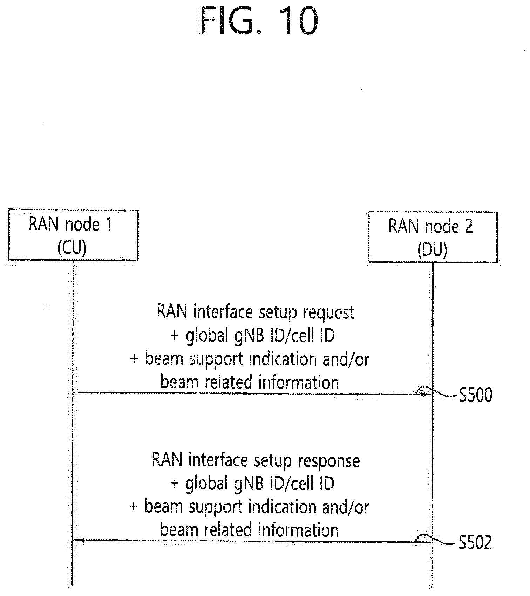

FIG. 10 shows an RAN interface setup procedure according to another embodiment of the present invention. In the present embodiment, the RAN interface may be an Xx interface set between a central unit (CU) and a distributed unit (DU). The CU has a function of a superordinate layer of a base station, and the DU has a function of a subordinate layer of the base station. However, the present invention is not limited thereto. In the present embodiment, the RAN interface setup procedure is initiated by the CU.

In step S500, when the RAN interface (e.g. Xx interface) is set between the RAN nodes (e.g. CU and DU), if the RAN node 1 (e.g. CU) supports beam technology, the RAN node 1 transmits a RAN interface setup request message to the RAN node 2 (e.g. DU). In this case, the RAN interface setup request message may include a global gNB ID and/or a cell ID. Further, the RAN interface setup request message may include beam support indication and/or beam related information (e.g. beam ID).

When the RAN node 2 receives an RAN interface setup request message including beam support indication and/or beam related information, the RAN node 2 may consider the received beam support indication and/or beam related information for a UE specific procedure. For example, resource allocation may be performed in a beam level. Alternatively, the mobility procedure may be performed in consideration of the beam level. Further, in step S502, the RAN node 2 transmits a RAN interface setup response message to the RAN node 1. In this case, the RAN interface setup response message may include a cell ID. Further, the RAN interface setup response message may include beam support indication and/or beam related information (e.g. beam ID).

When the RAN node 1 receives an RAN interface setup response message including beam support indication and/or beam related information, the RAN node 1 may also take an appropriate action based on the received beam support indication and/or beam related information. For example, resource allocation may be performed in a beam level. Alternatively, the mobility procedure may be performed in consideration of the beam level. Further, when the CU sets an Xn interface with another CU, the CU may transmit a beam ID and a cell ID of the corresponding DU to another CU. An interface setup procedure between the CU and another CU may follow that described with reference to FIG. 8.

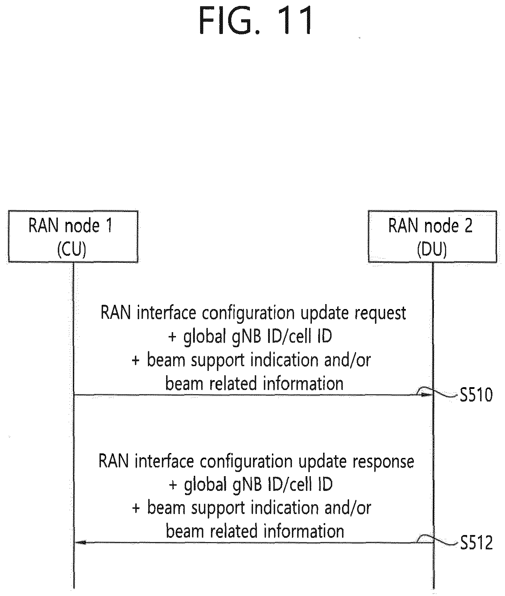

FIG. 11 shows a RAN interface configuration update procedure according to another embodiment of the present invention. In the present embodiment, the RAN interface may be an Xx interface set between the CU and DU. The CU has a function of a superordinate layer of the base station, and the DU has a function of a subordinate layer of the base station. However, the present invention is not limited thereto. In the present embodiment, the RAN interface configuration update procedure is initiated by the CU.

In step S510, when a configuration of the RAN interface (e.g. Xx interface) is updated between RAN nodes (e.g. CU and DU), if the RAN node 1 (e.g. CU) is updated to support beam technology, the RAN node 1 transmits a RAN interface configuration update request message to the RAN node 2 (e.g. DU). In this case, the RAN interface configuration update request message may include a global gNB ID and/or a cell ID. Furthermore, the RAN interface configuration update request message may include beam support indication and/or beam related information (e.g. beam ID).

When the RAN node 2 receives an RAN interface configuration update request message including beam support indication and/or beam related information, the RAN node 2 may consider the received beam support indication and/or beam related information for the UE specific procedure. For example, resource allocation may be performed in a beam level. Alternatively, the mobility procedure may be performed in consideration of the beam level. Further, in step S512, the RAN node 2 transmits a RAN interface configuration update response message to the RAN node 1. In this case, the RAN interface configuration update response message may include a cell ID. Further, the RAN interface configuration update response message may include beam support indication and/or beam related information (e.g. beam ID).

When the RAN node 1 receives an RAN interface configuration update response message including beam support indication and/or beam related information, the RAN node 1 may also take an appropriate action based on the received beam support indication and/or beam related information. For example, resource allocation may be performed in a beam level. Alternatively, the mobility procedure may be performed in consideration of the beam level. Further, when the CU sets an Xn interface with another CU, the CU may transmit a beam ID and a cell ID of the corresponding DU to another CU. An interface setup procedure between the CU and another CU may follow that described with reference to FIG. 8.

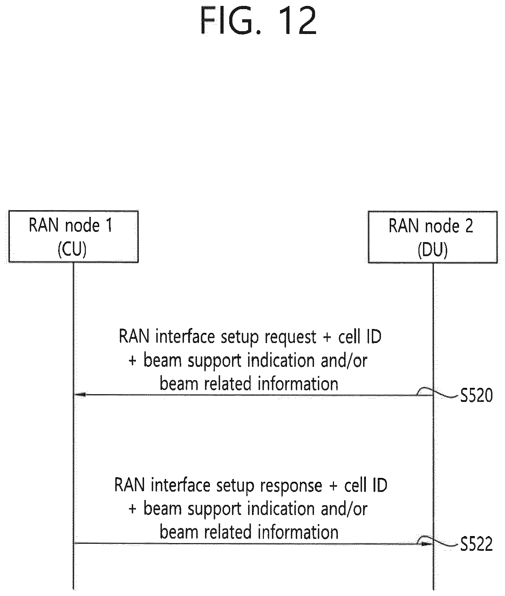

FIG. 12 shows a RAN interface setup procedure according to another embodiment of the present invention. In the present embodiment, the RAN interface may be an Xx interface set between the CU and DU. The CU has a function of a superordinate layer of the base station, and the DU has a function of a subordinate layer of the base station. However, the present invention is not limited thereto. In the present embodiment, the RAN interface setup procedure is initiated by the DU.

In step S520, when the RAN interface (e.g. Xx interface) is set between the RAN nodes (e.g. CU and DU), if a RAN node 2 (e.g. DU) supports beam technology, the RAN node 2 transmits an RAN interface setup request message to a RAN node 1 (e.g. CU). In this case, the RAN interface setup request message may include a cell ID. Further, the RAN interface setup request message may include beam support indication and/or beam related information (e.g. beam ID).

When the RAN node 1 receives an RAN interface setup request message including beam support indication and/or beam related information, the RAN node 1 may consider the received beam support indication and/or beam related information for a UE specific procedure. For example, resource allocation may be performed in a beam level. Alternatively, the mobility procedure may be performed in consideration of a beam level. Further, in step S522, the RAN node 1 transmits a RAN interface setup response message to the RAN node 2. In this case, the RAN interface setup response message may include a global gNB ID and/or a cell ID. Further, the RAN interface setup response message may include beam support indication and/or beam related information (e.g. beam ID).

When the RAN node 2 receives an RAN interface setup response message including beam support indication and/or beam related information, the RAN node 2 may also take an appropriate action based on the received beam support indication and/or beam related information. For example, resource allocation may be performed in a beam level. Alternatively, the mobility procedure may be performed in consideration of a beam level.

According to an embodiment of the present invention described with reference to FIGS. 10 to 12, because the CU and the DU may know each other, the CU and the DU may facilitate determination of a mobility procedure and other procedures of a specific UE. In this way, a system throughput can be much improved, and the UE can be much better serviced in terms of a throughput and mobility of the UE.

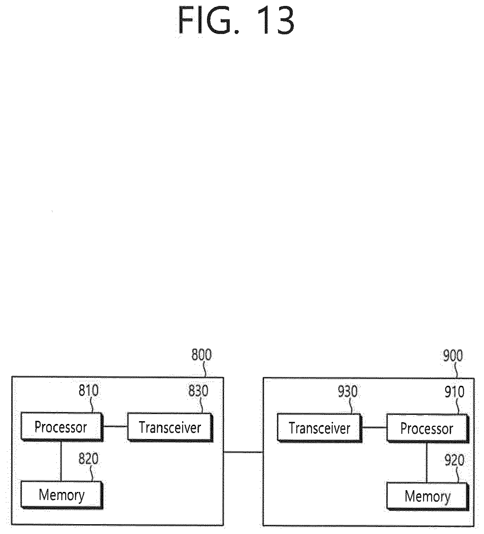

FIG. 13 shows a wireless communication system to implement an embodiment of the present invention.

A first RAN node 800 includes a processor 810, a memory 820 and a transceiver 830. The processor 810 may be configured to implement proposed functions, procedures and/or methods described in this description. Layers of the radio interface protocol may be implemented in the processor 810. The memory 820 is operatively coupled with the processor 810 and stores a variety of information to operate the processor 810 The transceiver 830 is operatively coupled with the processor 810, and transmits and/or receives a radio signal.

A second RAN node 900 includes a processor 910, a memory 920 and a transceiver 930. The processor 910 may be configured to implement proposed functions, procedures and/or methods described in this description. Layers of the radio interface protocol may be implemented in the processor 910. The memory 920 is operatively coupled with the processor 910 and stores a variety of information to operate the processor 910. The transceiver 930 is operatively coupled with the processor 910, and transmits and/or receives a radio signal.

The processors 810, 910 may include application-specific integrated circuit (ASIC), other chipset, logic circuit and/or data processing device. The memories 820, 920 may include read-only memory (ROM), random access memory (RAM), flash memory, memory card, storage medium and/or other storage device. The transceivers 830, 930 may include baseband circuitry to process radio frequency signals. When the embodiments are implemented in software, the techniques described herein can be implemented with modules (e.g., procedures, functions, and so on) that perform the functions described herein. The modules can be stored in memories 820, 920 and executed by processors 810, 910. The memories 820, 920 can be implemented within the processors 810, 910 or external to the processors 810, 910 in which case those can be communicatively coupled to the processors 810, 910 via various means as is known in the art.

In view of the exemplary systems described herein, methodologies that may be implemented in accordance with the disclosed subject matter have been described with reference to several flow diagrams. While for purposed of simplicity, the methodologies are shown and described as a series of steps or blocks, it is to be understood and appreciated that the claimed subject matter is not limited by the order of the steps or blocks, as some steps may occur in different orders or concurrently with other steps from what is depicted and described herein. Moreover, one skilled in the art would understand that the steps illustrated in the flow diagram are not exclusive and other steps may be included or one or more of the steps in the example flow diagram may be deleted without affecting the scope and spirit of the present disclosure.

## Claims

1. A method for performing a handover procedure by a source gNB in a wireless communication system, the method comprising:
receiving a measurement report including beam related information from a user equipment (UE);
determining to handover the UE towards a target gNB based on the measurement report; and
transmitting a handover request message including the beam related information to the target gNB.

2. The method of claim 1, wherein the measurement report is a beam level measurement report.

3. The method of claim 2, wherein the beam level measurement report corresponds to the beam related information.

4. The method of claim 1, wherein the beam related information includes a beam identifier (ID).

5. The method of claim 1, wherein the handover request message includes the measurement report.

6. The method of claim 1, wherein the handover request message includes a protocol data unit (PDU) session context to be handed over.

7. The method of claim 1, further comprising configuring the UE for a beam level measurement.

8. A method for performing a handover procedure by a target gNB in a wireless communication system, the method comprising:
receiving a handover request message including beam related information from a source gNB;
performing an admission control on a protocol data unit (PDU) session connection; and
transmitting a handover request acknowledge message to the source gNB.

9. The method of claim 8, further comprising using the beam related information for radio resource management (RRM) of a user equipment (UE).

10. The method of claim 8, wherein the beam related information includes a beam identifier (ID).

11. The method of claim 8, wherein the handover request message includes a measurement report reported by a UE.

12. The method of claim 11, wherein the measurement report is a beam level measurement report.

13. The method of claim 12, wherein the beam level measurement report corresponds to the beam related information.

14. The method of claim 8, wherein the handover request acknowledge message includes a beam ID.

15. The method of claim 8, wherein the admission control is performed based on a quality of service (QoS).
